# EUROPEAN PATENT APPLICATION

(11) **EP 4 614 251 A1**
(43) Date of publication of application: **10.09.2025**
(21) Application number: 22964217.8
(22) Date of filing: 28.11.2022
(51) Int. Cl.: G05B 19/418

(54) **TEST PROCESS ANALYSIS METHOD AND APPARATUS, ELECTRONIC DEVICE, AND STORAGE MEDIUM**

(30) Priority: 04.11.2022 CN 202211376098
(71) Applicant: Megarobo Technologies Co., Ltd., Beijing 102200 (CN)
(72) Inventor: ZHANG, Caifeng, Beijing 102200 (CN); LI, Gang, Beijing 102200 (CN)
(74) Representative: Hofmann, Matthias
(86) International application number: PCT/CN2022/134757
(87) International publication number: WO 2024/092921

(57) **Abstract**

Provided in the embodiments of the present invention are a test process analysis method and apparatus, an electronic device and a storage medium. The method comprises: acquiring service information of input nodes connected to a plurality of input connection lines connected to a multi-input-multi-output node, service information of output nodes connected to a plurality of output connection lines connected to the multi-input-multi-output node, and service information of the multi-input-multi-output node; on the basis of the connection relationship between the nodes, determining the analysis sequences for the nodes, the analysis sequence of the input nodes being prior to the analysis sequences of the multi-input-multi-output node and the output nodes; and, according to the determined node analysis sequences, configuring the service information of the nodes to the corresponding nodes so as to analyze the test process into a plurality of ordered operations. Therefore, after a user establishes a test process, said test process can be automatically executed on the basis of an analysis result after automatically analyzing the test process without manual analysis operations by the user, thereby greatly reducing the workload of users and providing a powerful guarantee for smooth and accurate execution of test processes.

## Description

The present disclosure claims the priority to Chinese patent application No. 202211376098.1, titled "TEST PROCESS ANALYSIS METHOD AND APPARATUS, ELECTRONIC DEVICE, AND STORAGE MEDIUM", filed on November 4, 2022 with the China National Intellectual Property Administration, which is incorporated herein by reference in its entirety.

### FIELD

The present disclosure relates to the technical field of automatic control, and in particular to a test process analysis method, a test process analysis apparatus, an electronic device, and a storage medium.

### BACKGROUND

At present, automation transformation is constantly being carried out in various technical fields to liberate manpower and improve efficiency. Automation systems are extensively used in automated manufacturing, automated inspection, automated testing, and other fields. Users can build the entire automation process using the interface provided by the automation system.

The built automation test process may be analyzed before execution so as to disassemble the entire automation test process into multiple minimum execution steps and assign tasks for each device to execute these minimum steps respectively. By allowing each device to complete its respective task, every minimum execution step is ensured to be carried out smoothly, thereby completing the entire automation process.

In the conventional technology, the above analysis process often requires user involvement, that is, users manually analyze the automation test process. This significantly increases the workload of users, and it is difficult to ensure the accuracy of manually analyzed results, which may lead to the built automation process failing to execute normally.

### SUMMARY

In view of the above problem, the present disclosure is provided. According to an aspect of the present disclosure, a test process analysis method is provided, wherein a multi-input multi-output node is included in a test process, and the method includes: acquiring service information of input nodes connected to a plurality of input lines that are connected to the multi-input-multi-output node, output nodes connected to a plurality of output lines that are connected to the multi-input multi-output node, and the multi-input multi-output node, the service information of nodes including preset node information and node information set when building the test process; determining the analysis order of the nodes based on connection relationship between the nodes, an analysis order of the input nodes preceding an analysis order of the multi-input multi-output node and an analysis order of the output nodes; and configuring the service information of the nodes to the corresponding nodes in accordance with the determined analysis order of the nodes to analyze the test process into a plurality of ordered operations.

In an embodiment, the determining the analysis order of the nodes based on the connection relationship between the nodes includes determining the following analysis order based on the connection relationship between the nodes: analyzing the input node connected to each of the plurality of input lines in units of the corresponding input line; analyzing the multi-input multi-output node after all input nodes are analyzed; and analyzing the output node connected to each of the plurality of output lines in units of the corresponding output line after the multi-input multi-output node is analyzed.

In an embodiment, the configuring the service information of the nodes to corresponding nodes in accordance with the determined analysis order of the nodes, to analyze the test process into the plurality of ordered operations includes: configuring the service information of the nodes to the corresponding nodes in accordance with the determined analysis order of the nodes, to determine ordered first operations corresponding to the input nodes, ordered second operations corresponding to the multi-input multi-output node, and ordered third operations corresponding to the output nodes; and acquiring a plurality of ordered operations in the analyzed test process in an order of the first operations, the third operations, and the second operations.

In an embodiment, the configuring the service information of the nodes to the corresponding nodes in accordance with the determined analysis order of the nodes, to determine ordered first operations corresponding to the input nodes, ordered second operations corresponding to the multi-input multi-output node, and ordered third operations corresponding to the output nodes includes: determining dependency relationship between the current node and its preceding adjacent node in accordance with the determined analysis order of the nodes; and configuring the current node using the service information of the preceding adjacent node and the service information of the current node in accordance with the dependency relationship, to determine one or more ordered operations corresponding to the current node.

In an embodiment, the method further includes: determining, during the configuration phase of the test process, desired execution order information in response to a setting operation by a user on a desired execution order of nodes in the test process; and wherein the configuring the service information of the nodes to the corresponding nodes in accordance with the determined analysis order of the nodes to analyze the test process into the plurality of ordered operations includes: configuring the desired execution order information to the corresponding nodes in accordance with the determined analysis order of the nodes, to determine original dependency relationship between the current node and its original preceding adjacent node, the original preceding adjacent node being the preceding adjacent node of the current node prior to the setting operation by the user; and configuring the current node using the service information of the original preceding adjacent node and the service information of the current node in accordance with the original dependency relationship, to determine one or more ordered operations corresponding to the current node.

In an embodiment, the acquiring service information of input nodes connected to the plurality of input lines that are connected to the multi-input multi-output node, output nodes connected to the plurality of output lines that are connected to the multi-input multi-output node, and the multi-input multi-output node includes: acquiring, for adjacently connected device nodes in the test process, information on pre-operations and/or post-operations of the device nodes; and wherein the configuring the service information of the nodes to the corresponding nodes in accordance with the determined analysis order, to determine ordered first operations corresponding to the input nodes, ordered second operations corresponding to the multi-input multi-output node, and ordered third operations corresponding to the output nodes includes: determining an execution order of the pre-operations and/or the post-operations of the device nodes and self-operations of the device nodes based on adjacent connection relationship between different device nodes in the test process and the information on the pre-operations and/or the post-operations of the device nodes.

In an embodiment, the determining the execution order of the pre-operations and/or the post-operations of the device nodes and self-operations of the device nodes based on adjacent connection relationship between different device nodes in the test process and the information on the pre-operations and/or the post-operations of the device nodes includes: when there is at least one repeated operation in post-operations of a previous device node and pre-operations of a subsequent device node among the adjacently connected device nodes, merging the at least one repeated operation in the post-operations of the previous device node and the pre-operations of the subsequent device node, such that each merged operation appears as a single operation in the execution order.

In an embodiment, determining that the analysis order of the input nodes precedes the analysis order of the multi-input multi-output node and the analysis order of the output nodes based on the connection relationship between the nodes, to determine the analysis order of the nodes includes: when there are process control nodes in the test process, determining, for each of the process control nodes, nodes between a starting position and an ending position of the process control node as an analysis unit for analyzing.

In an embodiment, the method further includes: providing a user interface with an operable control thereon, the operable control beings configured to acquire service information of the nodes.

According to another aspect of the present disclosure, a test process analysis apparatus is also provided. The apparatus includes:
information acquisition module, configured to acquire service information of input nodes connected to a plurality of input lines that are connected to a multi-input multi-output node, output nodes connected to a plurality of output lines that are connected to the multi-input multi-output node, and the multi-input multi-output node, the service information of nodes including preset node information and node information set when building the test process;
node analysis module, configured to determine that an analysis order of the input nodes precedes an analysis order of the multi-input multi-output node and an analysis order of the output nodes based on connection relationship between the nodes, to determine an analysis order of the nodes; and
operation analysis module, configured to configure the service information of the nodes to the corresponding nodes in accordance with the determined analysis order of the nodes to analyze the test process into a plurality of ordered operations.

According to yet another aspect of the present disclosure, an electronic device is also provided. The electronic device includes a processor and a memory. The memory stores computer program instructions which, when executed by the processor, are configured to perform the test process analysis method as described above.

According to still yet another aspect of the present disclosure, a storage medium having program instructions stored thereon is also provided. The program instructions, when executed, are configured to perform the test process analysis method as described above.

According to the above technical solution, automatic analysis of the multi-input multi-output node as well as the input nodes and the output nodes connected to the multi-input multi-output node in the test process can be realized. Therefore, after a user builds a test process, the test process can be automatically executed on the basis of the analysis results obtained from the automatic analysis of the test process, without manual analysis operations by the user. This greatly reduces the workload of users and provides a powerful guarantee for smooth and accurate execution of test processes.

Hereinabove provide are merely brief description of technical solutions of the present disclosure. Hereinafter detailed embodiments of the present disclosure are provided, such that technical means of the present disclosure are clarified and enabled according to content of the embodiments, and objectives, features, and advantages of embodiments of the present disclosure would become more intelligible.

### BRIEF DESCRIPTION OF THE DRAWINGS

Above and other objects, features, and advantages of the present disclosure will become more apparent with reference to the detailed description of the embodiments of the present disclosure made in conjunction with the drawings. The drawings are intended to provide further understanding of the embodiments of the present disclosure, and constitute a part of the specification. The drawings are intended to describe the present disclosure in conjunction with the embodiments of the present disclosure, and do not limit the present disclosure. In the drawings, same reference numerals generally represent same parts or steps.
FIG. 1 illustrates a schematic flowchart of a test process analysis method according to an embodiment of the present disclosure;
FIG. 2 illustrates a schematic flowchart of configuring service information of nodes to the corresponding nodes to analyze a test process into a plurality of ordered operations according to an embodiment of the present disclosure;
FIG. 3 illustrates a schematic flowchart of configuring service information of nodes to the corresponding nodes to determine ordered input operations corresponding to input nodes, ordered current operations corresponding to a multi-input multi-output node, and ordered output operations corresponding to output nodes according to an embodiment of the present disclosure;
FIG. 4 illustrates a schematic block diagram of a test process analysis apparatus according to an embodiment of the present disclosure; and
FIG. 5 illustrates a schematic block diagram of an electronic device according to an embodiment of the present disclosure.

### DETAILED DESCRIPTION

Exemplary embodiments of the present disclosure are described in detail with reference to the drawings to make purposes, solutions, and advantages of the present disclosure more apparent. Apparently, the described embodiments are only part of the embodiments instead of all embodiments of the present disclosure. It should be understood that, the present disclosure is not limited by the exemplary embodiments described herein. Based on the embodiments of the present disclosure described herein, all other embodiments obtained by those skilled in the art without creative efforts should fall within the scope of protection of the present disclosure.

As described above, with the development of automation technology, automation systems have been applied in various fields to realize automation transformation. Users can build an entire automation process using the interface provided by the automation system. The built automation process may be analyzed before execution. For example, the built test process includes: a first sample plate enters an incubator after being pipetted at the pipetting workstation. Accordingly, it is analyzed as follows: first, the robotic arm of the automation system transfers the first sample plate to an entrance plate position of the pipetting workstation; then, a transfer module in the pipetting workstation transfers the first sample plate from the entrance plate position to a pipetting operation area, and the pipetting workstation performs the pipetting operation; next, the transfer module in the pipetting workstation transfers the first sample plate from the pipetting operation area to an exit plate position; and finally, the robotic arm of the automation system transfers the first sample plate from the exit plate position of the pipetting workstation to an entrance of the incubator. A second sample plate is centrifuged in a centrifuge, is pipetted at the pipetting workstation, and then enters a microplate washer, sequentially. Accordingly, it is analyzed as follows: first, the robotic arm of the automation system opens the door of the centrifuge, and simultaneously transfers the second sample plate into the inside of the centrifuge; then, the robotic arm of the automation system closes the door of the centrifuge; the centrifuge performs a centrifugation operation; next, the robotic arm of the automation system opens the door of the centrifuge and transfers the second sample plate to an entrance plate position of the pipetting workstation; a transfer module in the pipetting workstation transfers the second sample plate from the entrance plate position to a pipetting operation area, and the pipetting workstation performs an pipetting operation; the transfer module in the pipetting workstation transfers the second sample plate from the pipetting operation area to the exit plate position; and finally, the robotic arm of the automation system transfers the second sample plate from an exit plate position of the pipetting workstation to an entrance of the microplate washer. If the above analysis process is all carried out by the user through manual operation, it can not only increase the workload of the user, making the process analysis time-consuming, but also make it difficult to ensure the accuracy of the analysis results.

In order to address the above technical problem, a test process analysis method is provided in the present disclosure. With this analysis method, the test process can be automatically and quickly analyzed before its execution.

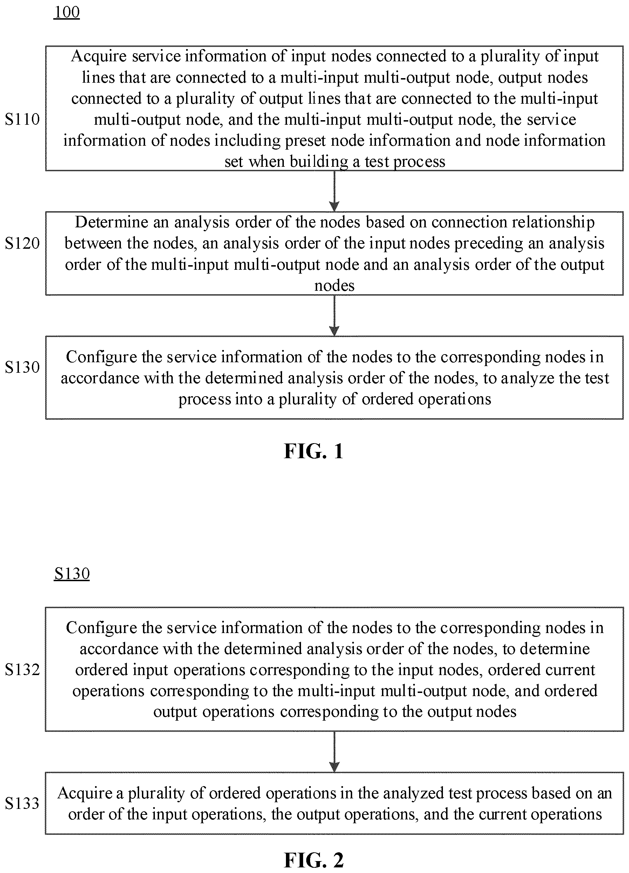

FIG. 1 illustrates a schematic flowchart of a test process analysis method 100 according to an embodiment of the present disclosure. As shown in FIG. 1, the analysis method 100 may include the following steps. A multi-input multi-output node is included in the test process. The multi-input multi-output node may be any one of a loop node, a device node, and a process control node. For the convenience of understanding and description, the following description is provided by taking the multi-input multi-output node being a device node as an example.

In step S110, service information of input nodes connected to multiple input lines that are connected to a multi-input multi-output node, output nodes connected to multiple output lines that are connected to the multi-input multi-output node, and the multi-input multi-output node is acquired. The service information of the nodes includes preset node information and node information set when building a test process.

In an embodiment, a host computer may receive service information of the input nodes, the output nodes and the multi-input multi-output node from the user. For example, the host computer may provide a visual interface to the user. Based on the visual interface, the user may input the service information of the nodes through an input device (such as a mouse, keyboard, etc.) of the host computer. Alternatively, the service information of the nodes may be stored in a storage device of the host computer in advance. The service information of the nodes may include preset node information and node information set when building a test process. The service information of the nodes includes attribute information, operation information related to operations, and the like. The attribute information may include the name, function of a node, and identifier information of a device node, and the like; the operation information includes operation instructions correspondingly to be executed by the node, execution time, information related to pre-operations and/or post-operations of the device node, and the like; the service information of the node may include the name, function, operation instructions correspondingly to be executed, and execution time of the node, and the like. In a specific embodiment, when building a test process, the user may input node information set during this process through an input device. The node information set when building the test process specifically includes, for example, identifier information, pre-operation and/or post-operation information of a device node, loop count information and loop exit condition information of a loop node, etc. The pre-operation of the device node is executed by an execution device for the pre-operation before a device corresponding to the device node is controlled to perform its self-operation, and the post-operation of the device node is executed by an execution device for the post-operation after the device corresponding to the device node is controlled to perform its self-operation. The execution device for the pre-operation and/or for the post-operation can be the same as or different from the device corresponding to the device node. For the nodes corresponding to the preset node information, if such nodes are involved in the built test process, the host computer can retrieve the preset node information from the storage device. The preset node information includes, for example, service information of the device node in the test process, such as parameter information including the function, location, etc., of the device corresponding to the device node. It can be understood that the preset node information may be set in advance by the user through an input device and a visual interface before building the test process, or may be set by a device or apparatus corresponding to the node at the time of leaving the factory. Here, "preset" may refer to a building process prior to the test process.

In the test process, a multi-input multi-output node refers to a node that has multiple input nodes and multiple output nodes. Multiple input nodes correspond to multiple input lines of the multi-input multi-output node in one-to-one correspondence respectively. Each of the input nodes is connected to the multi-input multi-output node via its corresponding input line respectively. Multiple output nodes correspond to multiple output lines of the multi-input multi-output node in one-to-one correspondence respectively. Each of the output nodes is connected to the multi-input multi-output node via its corresponding output line respectively.

In step S120, the analysis order of the nodes is determined based on the connection relationship between the nodes. The analysis order of the input nodes precedes the analysis order of the multi-input multi-output node and of the output nodes.

In an embodiment, the input or output relationship, i.e., the connection relationship between the nodes may be determined through a direction of the lines connecting each node. According to the connection relationship between the nodes, each node may be sorted sequentially. For example, for a node in the test process, it is sorted after its input node and before its output node. Specifically, for example, three nodes are included in the test process. A first node is an input node for a second node, and the second node is an input node for a third node. The three nodes are connected sequentially. For the second node, it is sorted after first node. For the third node, it is sorted after the second node. The node that appears more preceding in the order of node sorting has higher priority in analyzing. The node that appears more subsequent in the order of node sorting has lower priority in analyzing. It can be understood that, in the present application, "preceding" and "subsequent" may be relative to the starting position and the ending position of the test process. For example, a node that is closer to the starting position is referred to as the more preceding node, and a node that is closer to the ending position is referred to as the more subsequent node. In this embodiment, based on the connection relationship between the nodes, it is determined that the analysis order of all input nodes precedes the analysis order of the multi-input multi-output node and of the output nodes. That is, each of the input nodes is given priority in analyzing compared to the multi-input multi-output node and the output nodes. However, the analysis order of both the multi-input multi-output node and of the output nodes is not limited herein. Thus, the analysis order of the nodes in the test process can be determined.

In step S130, the service information of the nodes is configured to the corresponding nodes in accordance with the determined analysis order of the nodes, to analyze the test process into multiple ordered operations.

In an embodiment, after the analysis order of the nodes is determined in step S120, the service information of the nodes acquired in step S110 may be populated into each corresponding node, and thus a sequence of nodes having a certain analysis order and containing service information therein may be obtained. It can be understood that when populating the service information of the nodes, the order of populating does not have to follow the analysis order. The nodes can be divided into multiple groups, for example, the first two nodes as one group and the subsequent nodes as another group. When populating, the two nodes may be populated as a group, and then the subsequent three nodes may be populated as a group. Finally, the service information of the nodes at the connection (the second and third nodes) is supplemented and populated based on the service information; and of course, they can also be divided into three groups, and so on. By analyzing the nodes sequentially in the order of the nodes in the sequence, step information corresponding to each node can be obtained, such as what kind of operation to be performed by the device corresponding to the node, the execution time of such operation, and the like. Thereafter, in the order of the nodes in the sequence, the step information corresponding to all of the analyzed nodes in the test process is concatenated to obtain multiple operations arranged in order. Based on the multiple operations arranged in order, the test process may be executed in order.

According to the above technical solution, automatic analysis of the multi-input multi-output node as well as the input nodes and the output nodes connected to the multi-input multi-output node in the test process can be realized. Therefore, after a user builds a test process, the test process can be automatically executed based on the analysis results obtained from the automatic analysis of the test process without manual analysis operations by the user, thereby greatly reducing the workload of users and providing a powerful guarantee for smooth and accurate execution of test processes.

In an embodiment, the method 100 may further include providing a user interface. The user interface is provided with an operable control thereon. The operable control is configured to acquire the service information of the nodes.

It may be understood that in order to facilitate user operation, a visual interface may be provided to the user for human-computer interaction. Users can click on the control, which can lead to the user interface, on the visual interface through an input device such as a mouse, to display the user interface on the visual interface. The user interface is provided with an operable control thereon. The operable control may acquire the service information of the nodes in response to a user operation. The operable control may be a text input box, a filter box, or the like.

Accordingly, the user can input the service information of the nodes in the visual form of the user interface, which facilitates the user operation and improves the user experience.

In an embodiment, step S120 of determining, based on the connection relationship between the nodes, that the analysis order of the input nodes precedes the analysis order of the multi-input multi-output node and of the output nodes to determine the analysis order of the nodes, may include determining, based on the connection relationship between the nodes, the following analysis order: analyzing the input node connected to each of the input lines in units of the corresponding input line; analyzing the multi-input multi-output node after all input nodes are analyzed; and analyzing the output node connected to each of the output lines in units of the corresponding output line after the multi-input multi-output node is analyzed.

In this embodiment, the nodes are analyzed in units of lines. The following explanation is given with the example of having two input lines and two output lines respectively. Optionally, input nodes connected to a first input line may be analyzed first to determine the analysis order of the multiple input nodes connected to the first input line. Then, input nodes connected to a second input line may be analyzed to determine the analysis order of multiple input nodes connected to the second input line. In this case, all input nodes are analyzed. Next, a multi-input multi-output node may be analyzed. After the multi-input multi-output node is analyzed, output nodes connected to a first output line may be analyzed to determine the analysis order of the multiple output nodes connected to the first output line. Finally, output nodes connected to a second output line may be analyzed to determine the analysis order of the multiple output nodes connected to the second output line. Thus, the nodes can be analyzed in the analysis order as described above to determine the analysis order of all nodes.

Therefore, analyzing the nodes connected by each line in units of lines may ensure that all nodes connected by each line are analyzed, avoiding the risk of missing nodes during the analysis process, thereby ensuring the accuracy and reliability of the analysis results.

In an embodiment, step S120 of determining, based on the connection relationship between the nodes, that the analysis order of the input nodes precedes the analysis order of the multi-input multi-output node and of the output nodes to determine the analysis order of the nodes, may include: when there are process control nodes in the test process, determining, for each of the process control nodes, nodes between a starting position and an ending position of the process control node as an analysis unit for analyzing.

For example, the starting node of the test process may be a consumable node. Starting from the consumable node, the next node may be determined sequentially based on the direction of the lines connecting each node. In a specific embodiment, the next node of the consumable node is a centrifuge node. The next node of the centrifuge node is a process control node. In this embodiment, the process control node may include a decision node and a loop node. As a result, the next node of the centrifuge node may be a first starting position node of the decision node. A first ending position node of the decision node may be searched starting from the starting position node of the decision node. When analyzing the decision node, all nodes between the starting position node and the ending position node may be determined as an analysis unit for analyzing. The node following the decision node is a loop node. For the loop node in the test process, its starting position is a second starting position node, and its ending position is a second ending position node. When analyzing the loop node, all nodes between the second starting position node and the second ending position node may be determined as an analysis unit for analyzing. The next node of the loop node is the ending position node of the test process. It can be appreciated that the ending position node may not perform any operations and is used to place consumables at the end of the test process.

In the above technical solution, determining the process control node as an analysis unit for analyzing may ensure the logical accuracy of the test process analysis process, that is, it ensures the accuracy of the analysis results.

In an embodiment, step S110 of acquiring service information of input nodes connected to multiple input lines that are connected to a multi-input multi-output node, output nodes connected to multiple output lines that are connected to the multi-input multi-output node, and the multi-input multi-output node, may include: acquiring, for device nodes adjacently connected in the test process, information on pre-operations and/or post-operations of the device nodes. In this embodiment, the service information of the device nodes may include pre-operation and/or post-operation information of the device nodes. The pre-operation information may include a name of the execution device for performing the pre-operations, and pre-operation instructions. The post-operation information may include a name of the execution device for performing the post-operations, and post-operation instructions. Specifically, for example, the device corresponding to the device nodes is a pipetting workstation, which may have pre-operation and/or post-operation information. Specifically, before the pipetting station performs its own pipetting operation, the sample plate is placed in a pipetting operation area, i.e. a working area, within the pipetting workstation. Thus, a pre-operation of plate in may be set. Plate in may refer to the operation of moving the sample plate from an entrance plate position to the pipetting operation area by a transfer module in the pipetting workstation. Thereafter, the pipetting workstation performs a pipetting operation. After the pipetting operation is completed, a post-operation of plate out may be set for the pipetting workstation in a similar manner. Plate out may refer to the operation of moving the sample plate from the pipetting operation area to an exit plate position of the pipetting workstation by the transfer module in the pipetting workstation.

Step S130 of configuring the service information of the nodes to the corresponding nodes in accordance with the determined analysis order to determine ordered input operations (which may be referred to as first operations) corresponding to the input nodes, ordered current operations (which may be referred to as second operations) corresponding to the multi-input multi-output node, and ordered output operations (which may be referred to as third operations) corresponding to the output nodes, may include: step S131 in which the execution order of the pre-operations and/or post-operations of the device nodes as well as self-operations of the device nodes are determined based on the adjacent connection relationship between different device nodes in the test process and information on the pre-operations and/or post-operations of the device nodes.

As mentioned above, after the analysis order of the nodes is determined in step S120, the service information of the nodes acquired in step S110 may be configured to each corresponding node to obtain a sequence of nodes. Based on the sequence of nodes, the nodes may be analyzed sequentially. For one of the nodes, the execution order of all operations contained in this node may be obtained by analyzing. For example, for device node A, it is provided with pre-operation and post-operation. After analyzing device node A, the execution order of operations may be obtained as follows: pre-operation of device node A → self-operation of device node A → post-operation of device node A. After all device nodes and other nodes in the test process are analyzed, the test process may be analyzed into multiple ordered operations in the determined analysis order, with each operation having its respective execution device.

Thus, when a node is a device node and is provided with a pre-operation and/or a post-operation, all operations contained in the node may be analyzed and each operation may be sorted. This ensures the accuracy of the analysis results, which in turn facilitates the smooth execution of the test process.

In an embodiment, step S131 of determining the execution order of the pre-operations and/or the post-operations of the device nodes and the self-operations of the device nodes based on the adjacent connection relationship between different device nodes in the test process and information on the pre-operations and/or the post-operations of the device nodes, may include: step S131a in which when there is at least one repeated operation in the post-operations of the previous device node and the pre-operations of the subsequent device node of the adjacently connected device nodes, the at least one repeated operation in the post-operations of the previous device node and the pre-operations of the subsequent device node are merged correspondingly, such that each of the merged operations appears as a single operation in the execution order. Here, the repeated operations may refer to operations with the same execution device, operation instruction, and execution time.

In an embodiment, device node A and device node B are two device nodes connected adjacently. The device node A is referred to as the previous device node, and the device node B is referred to as the subsequent device node. It is assumed that there are 4 post-operations for device node A, namely a, b, c, and d. It is assumed that there are 3 pre-operations for device node B, namely c, d, and e. The post-operation c of device node A and the pre-operation c of device node B, as well as the post-operation d of device node A and the pre-operation d of device node B can be considered as repeated operations, respectively. Thus, the post-operation c of device node A may be merged with the pre-operation c of device node B, and the post-operation d of device node A may be merged with the pre-operation d of device node B. Further, in this embodiment, the determined execution order of the pre-operations and/or post-operations for device node A and device node B may be as follows: post-operation a of device node A → post-operation b of device node A → post-operation c of device node A (pre-operation c of device node B) → post-operation d of device node A (pre-operation d of device node B) → pre-operation e of device node B.

Therefore, for the case that there are repeated operations in the post-operations of the previous device node and the pre-operations of the subsequent device node, the repeated operations may be merged into one operation. It effectively reduces the number of operations in the analysis results and simplifies the analysis results, avoiding the issue of conflicts in the analysis results due to the repeated operations, thereby ensuring the accuracy of the analysis results.

FIG. 2 illustrates a schematic flowchart of step S130, in which the service information of the nodes are configured to the corresponding nodes in accordance with the determined analysis order of the nodes to analyze the test process into multiple ordered operations, according to an embodiment of the present disclosure. As shown in FIG. 2, step S130 may include step S132 to step S133.

In step S132, the service information of the nodes are configured to the corresponding nodes in accordance with the determined analysis order of the nodes, to determine ordered input operations corresponding to the input nodes, ordered current operations corresponding to the multi-input multi-output node, and ordered output operations corresponding to the output nodes.

As described above, after the service information of the nodes acquired in step S110 are populated into each corresponding node in accordance with the analysis order of the nodes determined in step S120, a sequence of nodes having a certain analysis order and containing the service information therein can be obtained. Specifically, for the input nodes, a sequence of input nodes having a certain analysis order and containing service information of the input nodes therein can be obtained. By analyzing the input nodes sequentially in accordance with the order of the input nodes in the sequence, step information corresponding to each input node can be obtained, such as what kind of operation to be performed by the device corresponding to the input node and the execution time of such operation. Thereafter, in accordance with the order of the input nodes in the sequence, the step information corresponding to all of the analyzed input nodes may be concatenated to obtain multiple input operations arranged in order. Multiple output operations arranged in order corresponding to the output nodes and ordered current operations corresponding to the multi-input multi-output node may be obtained in a similar way, which is not described in detail herein for brevity.

In step S133, multiple ordered operations in the analyzed test process are acquired based on the order of the input operations, the output operations, and the current operations.

After the ordered input operations, the ordered output operations, and the ordered current operations are obtained in step S132, all the obtained operations may be sorted in the order of input operations → current operations → output operations. Thus, multiple ordered operations in the analyzed test process can be determined. Based on the multiple ordered operations, the test process may be executed in order.

Thus, it can be determined that not only the operations from among the input operations, the output operations, and the current operations are in order, but also the input operations, the current operations, and the output operations are in order relative to each other. It ensures the accuracy of the analysis results and provides a guarantee for the smooth and accurate execution of the test process.

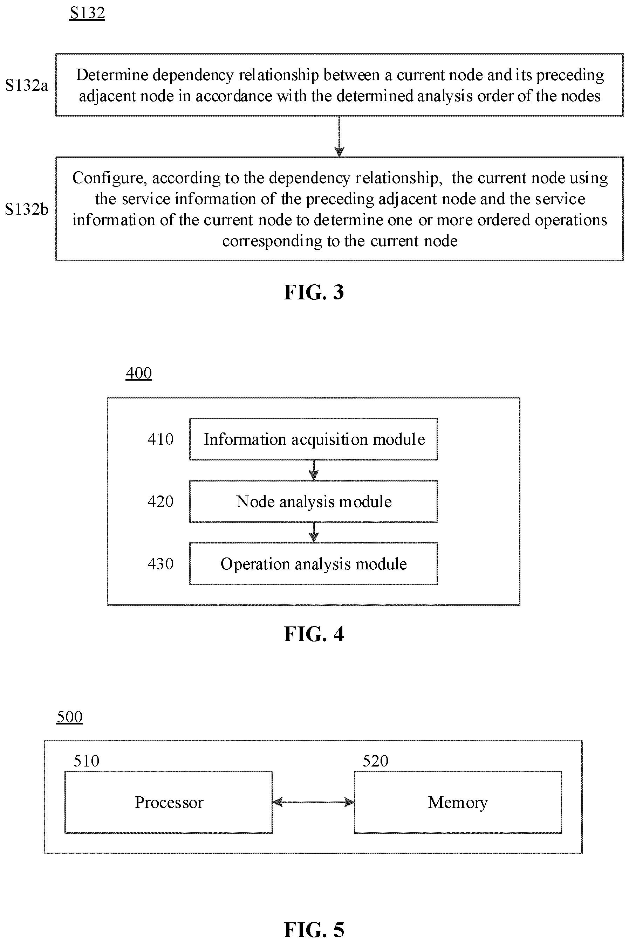

FIG. 3 illustrates a schematic flowchart of step S132, in which the service information of the nodes are configured to the corresponding nodes in accordance with the determined analysis order of the nodes to determine ordered input operations corresponding to the input nodes, ordered current operations corresponding to the multi-input multi-output node, and ordered output operations corresponding to the output nodes, according to an embodiment of the present disclosure. As shown in FIG. 3, step S132 may include step S132a to step S132b.

In step S132a, according to the determined analysis order of the nodes, dependency relationship between a current node and its preceding adjacent node is determined.

In an embodiment, the preceding adjacent node may refer to a node that is closer to the starting position of the test process than the current node and is adjacent to the current node. As mentioned above, the analysis order may contain sorting information of each node in the test process. The sorting information is determined based on the connection relationship between the nodes with each other. For one of other nodes in the test process except the starting node and the ending node, for example a node Y, it may have at least one input node X and at least one output node Z. It may be determined that node Y (the current node) is dependent on its input node X. For the output node Z, when it serves as the current node, node Y becomes the input node for node Z. It may be determined that node Z (the current node) is dependent on its input node Y. It can be understood that in this embodiment, the dependency relationship between the nodes is direct. Here, "direct" may mean that for node Z, although node X also precedes node Z in the analysis order, node X and node Z are not adjacent, with node Y therebetween, and thus this dependency relationship is indirect.

In step S132b, according to the dependency relationship, the current node is configured using the service information of the preceding adjacent node and the service information of the current node, to determine one or more ordered operations corresponding to the current node.

After the dependency relationship between the nodes may be determined in step S132a, the service information of the current node and its preceding adjacent node (the node that the current node depends on) acquired in step S110 may be populated into the current node, without populating the service information of other nodes into the current node. Accordingly, the current node may be analyzed based on the service information of the current node and the service information of its preceding adjacent node, and then one or more ordered operations corresponding to the current node can be determined.

Therefore, by analyzing the nodes using the direct dependency relationship between the nodes, the amount of data in the analysis process is effectively reduced, the interference from other nodes except the preceding adjacent node on the analysis results of the current node is avoided, and the accuracy of the analysis results is ensured.

In a specific embodiment, in the case where the multi-input multi-output node (the current node) is a device node, the dependency relationship between the device node and a control source node can be configured. The control source node is an input node for the device node. In other words, the control source node and the device node are adjacent to each other in sequence. The execution of the device node depends on the analysis of the control source node. During the execution of the test process, the control source node may be analyzed according to the execution situation of the nodes that are located ahead of the control source node in the test process. Preferably, in this embodiment, during the stage of building the test process, in order to facilitate user operation, the output line corresponding to the control source node may be omitted from multiple output lines of the multi-input multi-output node.

In the above solution, the control source node is analyzed only when the analysis conditions are met. This ensures the efficient analysis of the control source node. That is, the control source node is analyzed when the operations corresponding to the device node, in which the control source node is used as an input, can be actually executed. It avoids invalid analysis operations and speeds up the analysis speed of the test process.

In an embodiment, the method 100 may further include: determining, during a configuration phase of the test process, desired execution order information in response to a setting operation by a user on a desired execution order of nodes in the test process.

It can be understood that during the configuration phase of the test process, users may adjust the execution order of the test process according to their requirements. For example, users can set the execution order of nodes in the test process through an input device provided by a host computer to obtain the desired execution order. In response to the desired execution order, the desired execution order information of the nodes may be determined.

In this embodiment, step S130 of configuring the service information of the nodes to the corresponding nodes in accordance with the determined analysis order of the nodes to analyze the test process into multiple ordered operations, may include:
step S134, in which desired execution order information is configured to the corresponding nodes in accordance with the determined analysis order of the nodes, to determine original dependency relationship between the current node and its original preceding adjacent node, wherein the original preceding adjacent node is the preceding adjacent node of the current node prior to the setting operation by the user.

As mentioned above, the analysis order may contain sorting information of each node in the test process. The sorting information is determined based on the connection relationship between the nodes with each other. In an embodiment, the determined analysis order of the nodes is A→B→C→D. The desired execution order is: A→C→B→D. In this case, the desired execution order information is configured to the corresponding nodes, that is, node B and node C. For example, for node B, its original input node is node A and its original output node is node C. Thus, it may be determined that node B (the current node) is dependent on its original input node A. From this, the original dependency relationship between the current node and its original preceding adjacent node is determined.

In step S135, according to the original dependency relationship, the current node is configured using the service information of the current node and the service information of its original preceding adjacent node, to determine one or more ordered operations corresponding to the current node.

The original dependency relationship between the nodes may be determined in step S134, and then the service information of the current node and its original preceding adjacent node (the node that the current node depends on) acquired in step S110 may be populated into the current node, without populating the service information of other nodes into the current node. Accordingly, the current node may be analyzed based on the service information of the current node and the service information of its original preceding adjacent node, and then one or more ordered operations corresponding to the current node can be determined.

Therefore, by analyzing the nodes using the original dependency relationship between the nodes, the amount of data in the analysis process is effectively reduced, the interference of other nodes except the original preceding adjacent node on the analysis results of the current node is avoided, and the accuracy of the analysis results is ensured. At the same time, it meets the different needs of users and improves user experience.

According to another aspect of the present disclosure, a test process analysis apparatus is further provided. FIG. 4 illustrates a schematic block diagram of a test process analysis apparatus 400 according to an embodiment of the present disclosure. As shown in FIG. 4, the apparatus 400 includes an information acquisition module 410, a node analysis module 420, and an operation analysis module 430.

The information acquisition module 410 is configured to acquire service information of input nodes connected to multiple input lines that are connected to a multi-input multi-output node, output nodes connected to multiple output lines that are connected to the multi-input multi-output node, and the multi-input multi-output node, wherein the service information of the nodes include preset node information and node information set when building a test process.

The node analysis module 420 is configured to determine that an analysis order of the input nodes precedes an analysis order of the multi-input multi-output node and of the output nodes based on connection relationship between the nodes, to determine the analysis order of the nodes.

The operation analysis module 430 is configured to configure the service information of the nodes to the corresponding nodes in accordance with the determined analysis order of the nodes, to analyze the test process into multiple ordered operations.

In an embodiment, the operation analysis module 430 may include an information configuration module and an operation determination module. The information configuration module is configured to configure service information of the nodes to the corresponding nodes in accordance with the determined analysis order of the nodes, to determine ordered input operations corresponding to the input nodes, ordered current operations corresponding to the multi-input multi-output node, and ordered output operations corresponding to the output nodes. The operation determination module is configured to acquire multiple ordered operations in the analyzed test process based on the order of the input operations, the output operations, and the current operations.

In an embodiment, the information configuration module is specifically configured to: determine dependency relationship between the current node and its preceding adjacent node in accordance with the determined analysis order of the nodes; and configure the current node using the service information of the preceding adjacent node and the service information of the current node in accordance with the dependency relationship, to determine one or more ordered operations corresponding to the current node.

In an embodiment, the apparatus 400 may further include an order setting module. The order setting module is configured to determine desired execution order information in response to a setting operation by a user on the desired execution order of nodes in the test process during the configuration phase of the test process. In this embodiment, the operation analysis module 430 is further configured to: configure the desired execution order information to the corresponding nodes in accordance with the determined analysis order of the nodes, to determine the original dependency relationship between the current node and its original preceding adjacent node, wherein the original preceding adjacent node is the preceding adjacent node of the current node prior to the setting operation by the user; and configure the current node using the service information of the original preceding adjacent node and the service information of the current node in accordance with the original dependency relationship, so as to determine one or more ordered operations corresponding to the current node.

In an embodiment, the information acquisition module 410 is specifically configured to acquire information on pre-operations and/or post-operations of the device nodes for adjacently connected device nodes in the test process. The information configuration module is specifically configured to determine the execution order of the pre-operations and/or the post-operations of the device nodes and of the self-operations of the device nodes based on the adjacent connection relationship between different device nodes in the test process and information on the pre-operations and/or the post-operations of the device nodes.

In an embodiment, the information configuration module includes an operation merging module. The operation merging module is configured to merge, when there is at least one repeated operation in the post-operations of the previous device node and the pre-operations of the subsequent device node among the adjacently connected device nodes, the at least one repeated operation in the post-operations of the previous device node and the pre-operations of the subsequent device node correspondingly, such that each merged operation appears as a single operation in the execution order.

In an embodiment, the node analysis module 420 is specifically configured to: when there are process control nodes in the test process, determine, for each of the process control nodes, nodes between a starting position and an ending position of the process control node as an analysis unit for analyzing.

In an embodiment, the apparatus 400 may further include a display module. The display module is configured to provide a user interface with an operable control thereon, and the operable control is configured to acquire service information of the nodes.

According to yet another aspect of the present disclosure, an electronic device is also provided. FIG. 5 illustrates a schematic block diagram of an electronic device 500 according to an embodiment of the present disclosure. As shown in FIG. 5, the electronic device 500 may include a processor 510 and a memory 520. The memory 520 stores computer program instructions that, when executed by the processor 510, are configured to perform the test process analysis method as described above.

According to still another aspect of the present disclosure, a storage medium is also provided. The program instructions are stored on the storage medium, and when executed, are configured to perform the test process analysis method as described above. The storage medium may include, for example, a storage component of a tablet computer, a hard disk of a personal computer, a read-only memory (ROM), an erasable programmable read-only memory (EPROM), a portable compact disk read-only memory (CD-ROM), a USB memory, or any suitable combination of the above. The computer-readable storage medium may be any combination of one or more computer-readable storage media.

Specific implementation solutions of the above test process analysis apparatus, the electronic device and the storage medium may be understood by those skilled in the art by reading the above description of the test process analysis method, which is not described in detail herein for brevity.

Although the embodiments have been described herein with reference to the drawings, it should be understood that the above embodiments are merely exemplary and are not intended to limit the scope of the present disclosure. Many changes and modifications may be made by those skilled in the art without departing from the scope and spirit of the present disclosure. All such changes and modifications are deemed to fall within the scope of the claims of the present disclosure.

Those skilled in the art may realize that the units and algorithm steps of each example described in conjunction with the embodiments herein may be implemented by electronic hardware, or a combination of computer software and electronic hardware. Whether these functions are performed in hardware or software depends on the specific application and design constraints of the technical solution. Those skilled in the art may implement the described functionality in various manners for each specific application, while such implementations should not be considered to be beyond the scope of the present disclosure.

In the embodiments according to the present disclosure, it should be understood that the disclosed apparatus and method may be implemented in other forms. For example, the device embodiments described hereinabove are only schematic. For example, the division of the units is only based on logical functions, and there may be other division ways in actual implementation, such as multiple units or components can be combined or integrated into another device, or some features can be neglected or not executed.

In the specification provided herein, a lot of specific details are described. However, it may be appreciated that the embodiments of the present disclosure may be practiced without these specific details. In some instances, well-known methods, structures and technologies are not described in detail so as not to obscure the understanding of this specification.

Similarly, it should be understood that in order to simplify the present disclosure and help to understand one or more of the various aspects of the application, in the description of the exemplary embodiments of the present disclosure, the various features of the present disclosure are sometimes grouped together into a single embodiment, figure, or description thereof. However, the method according to the present disclosure should not be interpreted as reflecting the following intention: the claimed application requires more features than those explicitly stated in each claim. More specifically, as reflected in the corresponding claims, the inventive point is that the corresponding technical problem can be solved with features fewer than all the features of a single embodiment being disclosed. Therefore, the claims following the detailed description are hereby expressly incorporated into the detailed description, wherein each claim itself serves as an independent embodiment of the present disclosure.

It may be understood by those skilled in the art that, except for mutually exclusive features, all features disclosed in this specification (including the claims, abstract and drawings) and all processes or units of any method or device disclosed in this specification can be combined in any way. Unless otherwise expressly stated, each feature disclosed in this specification (including the claims, abstract and drawings) may be replaced by an alternative feature that provides the same, equivalent or similar purpose.

In addition, it may be understood by those skilled in the art that, although some embodiments described herein include certain features included in other embodiments instead of other features, the combination of features of different embodiments is meant to be within the scope of the present disclosure and form different embodiments. For example, in the claims, any one of the claimed embodiments can be used in any combination.

The various component embodiments of the present disclosure may be implemented in hardware, or in software modules running on one or more processors, or in a combination thereof. It should be understood by those skilled in the art that a microprocessor or a digital signal processor (DSP) may be used in practice to implement some or all functions of some modules of the test process analysis apparatus according to the embodiments of the present disclosure. The present disclosure may also be implemented as a device program (e.g., a computer program and a computer program product) for executing a part of or the entire method described herein. Such a program implementing the present disclosure may be stored on a computer-readable medium, or may be in the form of one or more signals. Such a signal may be downloaded from an Internet website, or provided on a carrier signal, or provided in any other form.

It should be noted that the above embodiments illustrate rather than limit the present disclosure, and alternative embodiments may be designed by those skilled in the art without departing from the scope of the claims. In the claims, any reference symbol between parentheses shall not be construed as a limitation of the claims. The word "comprising" does not exclude the presence of elements or steps not listed in the claims. The word "a" or "an" preceding an element does not exclude the presence of a plurality of such elements. The present disclosure may be implemented by means of hardware comprising several different elements and by means of a suitably programmed computer. In a unit claim enumerating several devices, several of these devices may be embodied by a same hardware item. The use of the words "first", "second", and "third", etc. does not indicate any order. These words may be interpreted as names.

The description hereinabove are merely specific embodiments of the present disclosure or explanations of the specific embodiments. The scope of the present disclosure is not limited thereto. Any variations or substitutions made by those skilled in the art within the technical scope disclosed in the present disclosure are deemed to fall within the scope of the present disclosure. The scope of the present disclosure is based on the scope of the claims.

## Claims

1. A test process analysis method, wherein a multi-input multi-output node is comprised in a test process, and the method comprises:
acquiring service information of input nodes connected to a plurality of input lines that are connected to the multi-input multi-output node, output nodes connected to a plurality of output lines that are connected to the multi-input multi-output node, and the multi-input multi-output node, the service information of nodes comprising preset node information and node information set when building the test process;
determining an analysis order of the nodes based on connection relationship between the nodes, an analysis order of the input nodes preceding an analysis order of the multi-input multi-output node and an analysis order of the output nodes; and
configuring the service information of the nodes to corresponding nodes in accordance with the determined analysis order of the nodes, to analyze the test process into a plurality of ordered operations.

2. The method according to claim 1, wherein the determining the analysis order of the nodes based on the connection relationship between the nodes comprises determining the following analysis order based on the connection relationship between the nodes:
analyzing the input node connected to each of the plurality of input lines in units of the corresponding input line;
analyzing the multi-input multi-output node, after all input nodes are analyzed; and
analyzing the output node connected to each of the plurality of output lines in units of the corresponding output line, after the multi-input multi-output node is analyzed.

3. The method according to claim 1 or 2, wherein the configuring the service information of the nodes to corresponding nodes in accordance with the determined analysis order of the nodes, to analyze the test process into the plurality of ordered operations comprises:
configuring the service information of the nodes to the corresponding nodes in accordance with the determined analysis order of the nodes, to determine ordered first operations corresponding to the input nodes, ordered second operations corresponding to the multi-input multi-output node, and ordered third operations corresponding to the output nodes; and
acquiring a plurality of ordered operations in the analyzed test process in an order of the first operations, the third operations, and the second operations.

4. The method according to claim 3, wherein the configuring the service information of the nodes to the corresponding nodes in accordance with the determined analysis order of the nodes, to determine ordered first operations corresponding to the input nodes, ordered second operations corresponding to the multi-input multi-output node, and ordered third operations corresponding to the output nodes comprises:
determining dependency relationship between the current node and its preceding adjacent node in accordance with the determined analysis order of the nodes; and
configuring the current node using the service information of the preceding adjacent node and the service information of the current node in accordance with the dependency relationship, to determine one or more ordered operations corresponding to the current node.

5. The method according to claim 1 or 2, further comprising:
determining, during the configuration phase of the test process, desired execution order information in response to a setting operation by a user on a desired execution order of the nodes in the test process; and
wherein the configuring the service information of the nodes to the corresponding nodes in accordance with the determined analysis order of the nodes to analyze the test process into the plurality of ordered operations comprises:
configuring the desired execution order information to the corresponding nodes in accordance with the determined analysis order of the nodes, to determine original dependency relationship between the current node and its original preceding adjacent node, the original preceding adjacent node being a preceding adjacent node of the current node prior to the setting operation by the user; and
configuring the current node using the service information of the original preceding adjacent node and the service information of the current node in accordance with the original dependency relationship, to determine one or more ordered operations corresponding to the current node.

6. The method according to claim 1 or 2, wherein
the acquiring service information of input nodes connected to the plurality of input lines that are connected to the multi-input multi-output node, output nodes connected to the plurality of output lines that are connected to the multi-input multi-output node, and the multi-input multi-output node comprises:
acquiring, for adjacently connected device nodes in the test process, information on pre-operations and/or post-operations of the device nodes; and
wherein the configuring the service information of the nodes to the corresponding nodes in accordance with the determined analysis order, to determine ordered first operations corresponding to the input nodes, ordered second operations corresponding to the multi-input multi-output node, and ordered third operations corresponding to the output nodes comprises:
determining an execution order of the pre-operations and/or the post-operations of the device nodes and self-operations of the device nodes based on adjacent connection relationship between different device nodes in the test process and the information on the pre-operations and/or the post-operations of the device nodes.

7. The method according to claim 5, wherein the determining the execution order of the pre-operations and/or the post-operations of the device nodes and self-operations of the device nodes based on adjacent connection relationship between different device nodes in the test process and the information on the pre-operations and/or the post-operations of the device nodes comprises:
when there is at least one repeated operation in post-operations of a previous device node and pre-operations of a subsequent device node among the adjacently connected device nodes, merging the at least one repeated operation in the post-operations of the previous device node and the pre-operations of the subsequent device node, such that each merged operation appears as a single operation in the execution order.

8. The method according to claim 1 or 2, wherein
the determining that the analysis order of the input nodes precedes the analysis order of the multi-input multi-output node and the analysis order of the output nodes based on the connection relationship between the nodes, to determine the analysis order of the nodes comprises:
when there are process control nodes in the test process, determining, for each of the process control nodes, nodes between a starting position and an ending position of the process control node as an analysis unit for analyzing.

9. The method according to claim 1 or 2, further comprising:
providing a user interface with an operable control thereon, the operable control being configured to acquire the service information of the nodes.

10. A test process analysis apparatus, comprising:
information acquisition module, configured to acquire service information of input nodes connected to a plurality of input lines that are connected to a multi-input multi-output node, output nodes connected to a plurality of output lines that are connected to the multi-input multi-output node, and the multi-input multi-output node, the service information of nodes comprising preset node information and node information set when building a test process;
node analysis module, configured to determine that an analysis order of the input nodes precedes an analysis order of the multi-input multi-output node and an analysis order of the output nodes based on connection relationship between the nodes to determine an analysis order of the nodes; and
operation analysis module, configured to configure the service information of the nodes to the corresponding nodes in accordance with the determined analysis order of the nodes to analyze the test process into a plurality of ordered operations.

11. An electronic device, comprising a processor and a memory, the memory storing computer program instructions which, when executed by the processor, are configured to perform the test process analysis method of any one of claims 1 to 9.

12. A storage medium, storing program instructions, wherein the program instructions, when executed, are configured to perform the test process analysis method of any one of claims 1 to 9.
